# EUROPÄISCHE PATENTSCHRIFT

(11) **EP 1 640 210 B1**
(45) Veröffentlichungstag und Bekanntmachung des Hinweises auf die Patenterteilung: **08.08.2007**
(21) Anmeldenummer: 05020632.5
(22) Anmeldetag: 22.09.2005
(51) Int. Cl.: B60P 7/08, B60R 7/00

(54) **Netz für Lastenarretierung**
Load retention net
Filet de retenue d'une charge

(30) Priorität: 23.09.2004 DE 202004014965 U
(43) Veröffentlichungstag der Anmeldung: 29.03.2006
(73) Patentinhaber: Westdeutscher Drahtseil-Verkauf Dolezych GmbH & Co., 44147 Dortmund (DE)
(72) Erfinder: Schöbel, Uwe, Dipl.-Ing., 44319 Dortmund (DE)
(74) Vertreter: Nunnenkamp, Jörg

(56) Entgegenhaltungen:
- DE-C1- 19 634 104
- DE-U1- 7 611 939
- GB-A- 1 589 084
- US-A- 2 594 208
- US-A- 2 705 461
- US-A- 5 058 786
- US-A- 5 427 486
- US-A- 5 685 470

## Beschreibung

Die Erfindung betrifft ein flächiges Sicherungsmittel, insbesondere Sicherungsnetz, zum Sichern einer oder mehrerer Ladungen während ihres Transportes auf der Ladefläche eines Fahrzeuges, mit einer Sicherungsfläche, welche sich wenigstens teilweise an die Kontur der zu sichernden Ladung anpasst, und mit einem formstabilen Sicherungsanker, welcher mit der Sicherungsfläche und der Ladefläche zur Fixierung der Sicherungsfläche verbunden ist, wobei der Sicherungsanker eine Festrandseite der Sicherungsfläche definiert, während an wenigstens einer Losrandseite der Sicherungsfläche zumindest ein Verbindungsgurt zur vorzugsweise längenvariablen Festlegung der Sicherungsfläche an der Ladefläche vorgesehen ist.

Flächige Sicherungsmittel in Gestalt von insbesondere Sicherungsnetzen dienen üblicherweise dazu, Ladungen auf Ladeflächen von zum Beispiel LKWs, PKWs, (Güter-) Anhängern etc. zu sichern. Die Ladungssicherung ist von enormer Bedeutung wenn man sich vergegenwärtigt, dass bereits bei Aufprallgeschwindigkeiten von ca. 50 km/h eine ungesicherte Ladung eine Aufprallkraft erzeugt, die ihrem 50fachen Gewicht entspricht. Gerade in letzter Zeit sind besonders Kleintransporter in schwere Unfälle verwickelt worden, die sich zum Teil auf nicht richtig gesicherte Ladung zurückführen lassen.

Beim gattungsbildenden Stand der Technik nach der DE 196 34 104 C1wird so vorgegangen, dass entlang der Festrandseite bzw. Festlegungsseite eine eigenstabile Stange am Netz und nahe der Ladefläche angeordnet ist. Von dieser Stange ausgehend sind als Zugmittel nicht dehnbare Gurte am Netz festgelegt, deren der Festlegungsseite gegenüberliegende, freie Endbereiche nahe der Ladefläche verankerbar sind. Auf diese Weise soll für eine sichere Festlegung des Ladegutes an der Ladefläche gesorgt werden.

Darüber hinaus kennt man durch die US-PS 5 427 486 eine verstellbare Laderaumabtrennung, die auf wenigstens zwei verstellbare Teleskopstangen zur Festlegung einer Sicherungsfläche zurückgreift. Die Verstellbarkeit der Teleskopstangen wird ähnlich wie bei verstellbaren Stangen zur Aufnahme von Vorhängen bewerkstelligt.

Ferner beschreibt die DE 199 15 514 C1 ein Sicherungsnetz, welches über Festenden-Verbindungsgurte für eine Befestigung auf der Ladungsfläche sorgt. Das bekannte Sicherungsnetz hat sich bewährt, ist jedoch von seinem Anwendungsspektrum her insofern eingeschränkt, als die Festenden-Verbindungsgurte zwingend Zurrpunkte auf der Ladefläche zu ihrer Verankerung benötigen. Auch lässt sich das bekannte Sicherungsnetz überwiegend nur zum Niederzurren der Ladung verwenden.

Der Stand der Technik nach der DE 197 38 130 A1 befasst sich schließlich mit einer Vorrichtung zum Sichern von Fracht oder Gepäck in einem Fracht- oder Gepäckraum. Dazu ist ein netz- oder bandartiges Element vorgesehen, welches mit dem Gepäckraum in Verbindung stehend fest angeordnet ist. Ferner finden sich ein erstes Verriegelungselement und ein zweites Verriegelungselement. Das erste Verriegelungselement weist eine Stange auf. Zusätzlich ist eine Einziehvorrichtung vorgesehen, die fest mit der Karosserie des Fahrzeuges verbunden ist. Am freien Ende des Gepäcknetzes befindet sich die besagte Stange, welche in der Regel senkrecht angeordnet wird und mit Ausnehmungen wechselwirkt. Dadurch können zum einen Güter nur unzureichend festgelegt werden, sind zum anderen definierte Verankerungspunkte für die Stange erforderlich. Hier will die Erfindung insgesamt Abhilfe schaffen.

Der Erfindung liegt das technische Problem zugrunde, ein gattungsgemäßes flächiges Sicherungsmittel, insbesondere Sicherungsnetz, so weiter zu entwickeln, dass eine Festlegung auch ohne vorgesehene Zurrpunkte gelingt und das Anwendungsspektrum vergrößert wird.

Zur Lösung dieser technischen Problemstellung ist ein gattungsgemäßes flächiges Sicherungsmittel dadurch gekennzeichnet, dass der Sicherungsanker als Teleskopstange ausgeführt ist, welche wenigstens ein Hohlrohr und ein demgegenüber per Federkraft vorgespanntes Tauchrohr sowie eine aus einem Verriegelungsschieber und einer L-förmig gestalteten Verriegelungskulisse zusammengesetzte Verriegelungseinrichtung aufweist, wobei die Verriegelungseinrichtung in verriegelter Stellung das Tauchrohr gegen die Federkraft vorspannt und in entriegelter Stellung das Tauchrohr freigibt. - In der Regel liegen sich die Festrandseite und die Losrandseite mit der dazwischen befindlichen Sicherungsfläche gegenüber.

Durch den formstabilen Sicherungsanker gelingt zunächst einmal die Festlegung des flächigen Sicherungsmittels, ohne dass Zurrpunkte an oder auf der Ladefläche vorhanden sein müssen. Dadurch, dass der Sicherungsanker längenvariabel ausgebildet ist, kann er infolgedessen beispielsweise zwischen zwei Bordwänden einer Ladefläche eingeklemmt werden. Auf diese Weise stellt der Sicherungsanker die nötige Verankerung für das Sicherungsmittel im Ganzen bzw. dessen Sicherungsfläche zur Verfügung. Dazu ist der Sicherungsanker im Detail als Teleskopstange ausgeführt. Die Teleskopstange besitzt ein Hohlrohr und ein demgegenüber per Federkraft vorgespanntes Tauchrohr.

Zusätzlich weist die Teleskopstange die Verriegelungseinrichtung auf, welche in verriegelter Stellung das Tauchrohr gegen die Federkraft vorspannt und in entriegelter Stellung das Tauchrohr freigibt. Auf diese Weise kann die Teleskopstange unschwer beispielsweise im Innern eines LKWs zwischen den zwei gegenüberliegenden Bordwänden festgelegt und montiert werden, indem die Verriegelungseinrichtung in ihrer verriegelten Stellung zwischen den Bordwänden platziert wird. Mit Hilfe des bei entriegelter Verriegelungseinrichtung aus dem Hohlrohr hervortretenden Tauchrohres wird anschließend für das gewünschte Festklemmen gesorgt.

Dabei wird die Teleskopstange insgesamt zunächst mit Hilfe einer verstellbaren und an das Hohlrohr angeschlossene Basis auf den groben Abstand der beiden Bordwände eingestellt. Der dann noch verbleibende Spalt wird nach Entriegeln der Verriegelungseinrichtung durch das Tauchrohr überbrückt. Hierdurch kann mit dem erfindungsgemäßen flächigen Sicherungsmittel nicht nur Ladung niedergezurrt werden, sondern das Sicherungsmittel lässt sich vorteilhaft auch als Laderaumabtrennung einsetzen, wie mit Bezug zur Figurenbeschreibung noch näher erläutert wird. Es ergeben sich so vielfältige Anwendungsmöglichkeiten, die der bisherige Stand der Technik nicht abzudecken vermochte.

Dabei hat es sich bewährt, den Sicherungsanker randseitig der Sicherungsfläche anzuordnen bzw. in diese zu integrieren, und zwar im Detail an einen Gurt, der aus Gurten zusammengesetzten Sicherungsfläche anzuschließen. Selbstverständlich kann die Sicherungsfläche auch mit Hilfe von Seilen, Zwirnen etc. dargestellt werden, verfügt dabei aber immer über ein entsprechendes Netzwerk, dessen Gurte oder Seile an Kreuzungspunkten miteinander verbunden sind. Das kann beim Rückgriff auf Gurte, insbesondere Flachgurte, vorzugsweise Maschengurte, durch Nähverbindungen erreicht werden. Dabei ist die Maschenweite dieses Netzes selbstverständlich an die Belastungen angepasst und trägt der Größe der zu sichernden Ladungen Rechnung. In diesem Zusammenhang kann die Einheit aus Sicherungsanker und Sicherungsnetz ausdrücklich nicht getrennt werden.

Es versteht sich, dass der Sicherungsanker bzw. die Teleskopstange nicht nur zwischen zwei Bordwänden festgeklemmt werden kann, sondern alternativ oder zusätzlich mit Hilfe von Verbindungseinrichtungen eine Sicherung an vorhandenen Zurrpunkten oder dergleichen erfahren kann. Sofern auf eine Verankerung zwischen Ladebordwänden zurückgegriffen wird, lässt sich der Sicherungsanker bzw. die Teleskopstange in Befestigungsleisten verankern. Dadurch wird nicht nur eine Längsverschiebbarkeit des Sicherungsankers bzw. der Teleskopstange in Längsrichtung der Befestigungsstangen erreicht, sondern auch dessen unbeabsichtigtes Lösen und/oder Verschieben verhindert. Dazu mag die Teleskopstange per Formschluss in die Befestigungsleiste eingreifen, so dass auch schwere Stückgüter gesichert werden können. Das Gleiche gilt im Hinblick auf hohe Güter, die vor Kippbewegungen bewahrt werden. Eventuelle Adapter endseitig des Sicherungsankers, die auswechselbar sind, gewährleisten, dass unterschiedlich gestaltete Befestigungsleisten als Ankerpunkte für den Sicherungsanker fungieren können.

Im Ergebnis überzeugt das erfindungsgemäße flächige Sicherungsmittel durch ein gegenüber dem Stand der Technik deutlich erweitertes Anwendungsspektrum. Denn die Ladung lässt sich nicht durch Niederzurren, sondern auch in Querrichtung fixieren. Ebenso kann das erfindungsgemäße Sicherungsmittel als Laderaumabtrennung fungieren.

In jedem Fall wird mit dem formstabilen Sicherungsanker, der nach bevorzugter Ausführungsform von seiner Länge her im Wesentlichen der Länge der Festrandseite der Sicherungsfläche entspricht, eine von Zurrpunkten auf der Ladefläche unabhängige Verankerung des Sicherungsmittels bzw. Sicherungsnetzes ermöglicht. Dabei kann die wenigstens eine Losrandseite der Sicherungsfläche auf ganz unterschiedliche Art und Weise unter Festlegung der Ladung mit der Ladefläche verzurrt werden. Denkbar ist es hier, mit längenveränderlichen Gurten mit oder ohne Ratsche zu arbeiten, die in Haken eingehängt werden oder über Karabinerhaken, Deltabügel oder Zurrösen eine Verbindung mit der Sicherungsfläche eingehen. Selbstverständlich kann ein entsprechender Spanngurt an der Losrandseite der Sicherungsfläche auch mit einem dortigen Gurt bzw. Flachgurt vernäht werden.

Besonders vorteilhaft werden zur Festlegung der Losrandseite der Sicherungsfläche so genannte Schnellspanner eingesetzt. Hierbei handelt es sich um mit der Sicherungsfläche wenigstens einseitig verbundene Gurtspanner mit endseitigem Karabinerhaken, Deltabügel oder Zurröse. Durch den Gurtspanner kann die Länge des Schnellspanners bzw. des Verbindungsgurtes variabel und schnell festgelegt werden, beispielsweise unter Rückgriff auf eine Ratsche, eine Gurtklemme etc.. Dadurch wird erfindungsgemäß erreicht, dass das beschriebene flächige Sicherungsmittel an sämtlichen auf der Ladefläche vorhandenen Zurrpunkten festgelegt werden kann.

Auf diese Weise werden die sämtlichen Zurrpunkte in das Niederzurren bzw. Festspannen der Ladung mit einbezogen. Gleichzeitig sorgt der formstabile Sicherungsanker dafür, dass Ladebordwände, Fahrzeugseitenwände, Fahrzeugtrennwände etc. oder andere fahrzeugspezifische Festpunkte zusätzlich zu den Zurrpunkten in die Ladungssicherung integriert werden.

Die Teleskopstange, welche in das Sicherungsmittel integriert ist, lässt schließlich eine platzsparende Verstauung des erfindungsgemäßen Sicherungsmittels zu, beispielsweise an einer Seitenwand eines LKWs. Dabei kann die Teleskopstange bzw. der formstabile Sicherungsanker in die Sicherungsfläche eingeflochten sein, in Schlaufen der Sicherungsfläche eingeschoben sein oder auf jedwede andere Art und Weise mit der Sicherungsfläche verbunden sein. Auf diese Weise gelingt einerseits die beschriebene (senkrechte) Aufbewahrung, wird andererseits ein unmittelbar gebrauchsfertiger Zustand erreicht, weil sich das Sicherungsmittel nicht oder nur kaum verheddern kann.

Die Sicherungsfläche als solche setzt sich aus einem Netzwerk aus sich kreuzenden Gurten, d.h. einem Gurtbandnetz zusammen. Alternativ oder zusätzlich kann aber auch ein Seilnetz oder jede andere netzartige Struktur Verwendung finden. Dabei versteht es sich, dass die Sicherungsfläche bei Bedarf größenvariabel eingestellt werden kann, und zwar durch beispielsweise aufgebrachte Klettbänder und indem die Sicherungsfläche faltend sowie mit Hilfe der Klettbänder gleichzeitig fixierend verkleinert wird. Auch zusätzliche Adapternetze sind denkbar, die mit der Sicherungsfläche verbunden werden können und diese vergrößern.

Ebenso liegt es im Rahmen der Erfindung, endseitig des Sicherungsankers bzw. der an dieser Stelle meist verwirklichten Teleskopstange mit Adaptern, insbesondere auswechselbaren Adaptern, zu arbeiten. Auf diese Weise kann unterschiedlich ausgeprägten Anschlusspunkten für die Teleskopstange Rechnung getragen werden, je nachdem wie beispielsweise die zugehörigen Ladebordwände an dieser Stelle ausgerüstet sind. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: das erfindungsgemäße flächige Sicherungsmittel in Gestalt des Sicherungsnetzes in unmontiertem ausgebreiteten Zustand,
- Fig. 2: den Sicherungsanker in Gestalt der Teleskopstange im Detail und
- Fig. 3a, 3b und 3c: verschiedene Einbausituationen.

In den Figuren ist ein flächiges Sicherungsmittel dargestellt, bei dem es sich um ein Sicherungsnetz handelt. Das Sicherungsnetz dient zum Sichern von Ladungen 1 während ihres Transportes auf der Ladefläche 2 eines Fahrzeuges 3. Als Ladungen 1 kommen üblicherweise Stückgüter wie Kartons, Paletten, Pakete, (Elektro-)Geräte etc. in Frage. Das dargestellte Sicherungsmittel bzw. Sicherungsnetz verfügt über eine Sicherungsfläche 4, welche sich wenigstens teilweise an die Kontur der zu sichernden Ladung 1 anpasst.

Zu diesem Zweck ist die Sicherungsfläche 4 als Netzwerk aus sich kreuzenden Gurten 5 ausgebildet. Bei diesen Gurten 5 handelt es sich um Flachgurte bzw. Maschengurte, die die rechtwinklige Sicherungsfläche 4 bzw. das zugehörige rechteckige Netzwerk definieren und zu diesem Zweck an Kreuzungspunkten 6 miteinander verbunden, im Beispielfall vernäht, sind. Die Gurte 5 weisen einen rechtwinkligen Querschnitt auf, so dass sie sich in ihren Kreuzungspunkten 6 flach aufeinander liegend miteinander vernähen oder sonst wie verbinden lassen.

Zu dem flächigen Sicherungsmittel gehört darüber hinaus ein formstabiler Sicherungsanker 7, der mit dem Sicherungsmittel bzw. der Sicherungsfläche 4 und der Ladefläche 2 des Fahrzeuges 3 verbunden ist. Auf diese Weise dient der Sicherungsanker 7 zur Fixierung des Sicherungsnetzes bzw. der Sicherungsfläche 4 an der Ladefläche 2. Tatsächlich ist der Sicherungsanker 7 in das Sicherungsmittel bzw. die Sicherungsfläche 4 integriert. Im Gegensatz zu dem Sicherungsmittel bzw. der Sicherungsfläche 4 passt sich der Sicherungsanker 7 nicht an die Form der Ladung 1 an, sondern behält diese bei, ist also formstabil.

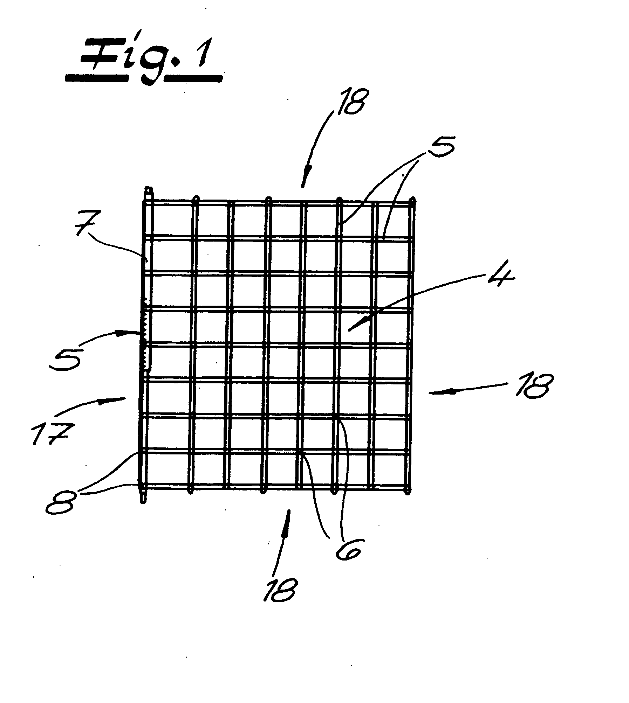

Der Sicherungsanker 7 ist randseitig an einen Gurt 5 der aus den Gurten 5 zusammengesetzten Sicherungsfläche 4 angeschlossen, wie insbesondere die Fig. 1 deutlich macht. Dieser Anschluss mag im Detail so realisiert sein, dass der als Teleskopstange 7 ausgeführte Sicherungsanker 7 durch Schlaufen 8 an dem betreffenden Gurt 5 randseitig der Sicherungsfläche 4 hindurchgeführt wird. Selbstverständlich sind auch andere Verbindungen des Sicherungsankers bzw. der Teleskopstange 7 mit dem Sicherungsmittel randseitig der Sicherungsfläche 4 denkbar und werden vom Erfindungsgedanken umfasst.

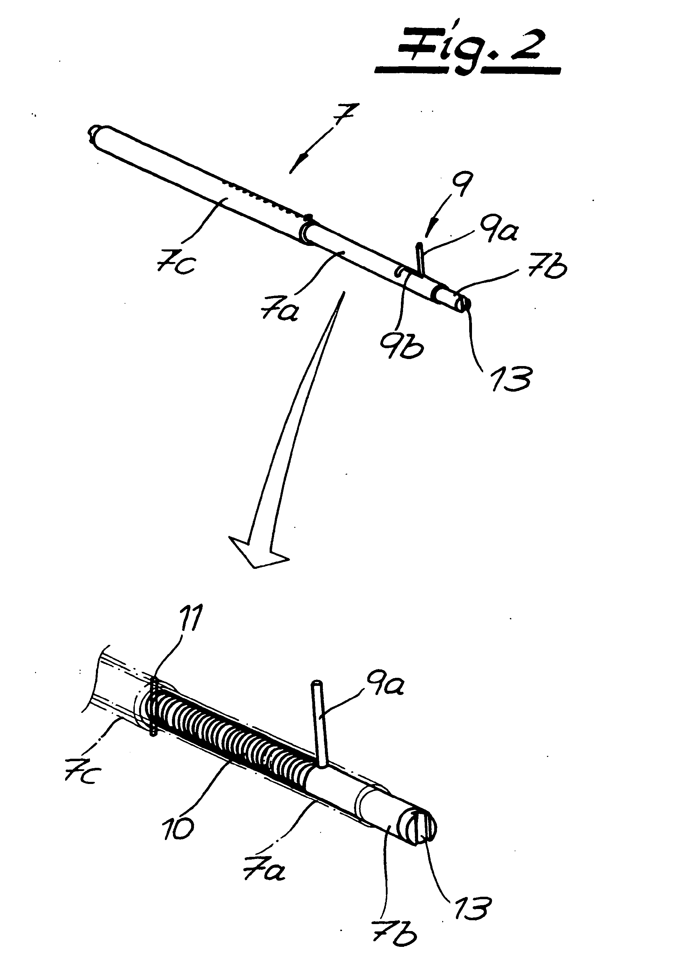

Der Sicherungsanker bzw. die Teleskopstange 7 ist längenvariabel ausgeführt. Dazu verfügt die Teleskopstange 7 über wenigstens ein Hohlrohr 7a und ein demgegenüber per Federkraft vorgespanntes Tauchrohr 7b. Zusätzlich ist noch eine längenvariable optionale Basis 7c vorgesehen, welche an das Hohlrohr 7a angeschlossen ist, im Ausführungsbeispiel das Hohlrohr 7a übergreift, wie man am besten in der Fig. 2 erkennen kann.

Schließlich verfügt die Teleskopstange 7 noch über eine Verriegelungseinrichtung 9, welche in verriegelter Stellung das Tauchrohr 7b gegen die Kraft einer Feder 10 vorspannt und in entriegelter Stellung das Tauchrohr 7b freigibt. Anhand der Fig. 2 erkennt man, wie die Verriegelungseinrichtung im Detail aufgebaut ist. Tatsächlich setzt sich die Verriegelungseinrichtung 9 aus einem Verriegelungsschieber 9a sowie einer Verriegelungskulisse 9b zusammen, die L-förmig gestaltet ist. Der Verriegelungsschieber 9a ist an das Tauchrohr 7b angeschlossen. Die Feder 10 stützt sich im Inneren des Hohlrohres 7a mit ihrem einen Ende gegenüber einem Anschlag 11 ab und beaufschlagt mit ihrem anderen Ende den Verriegelungsschieber 9a, welcher in entriegelter Position der Verriegelungseinrichtung 9 gegen das Ende des langen L-Schenkels der Kulisse 9b anliegt.

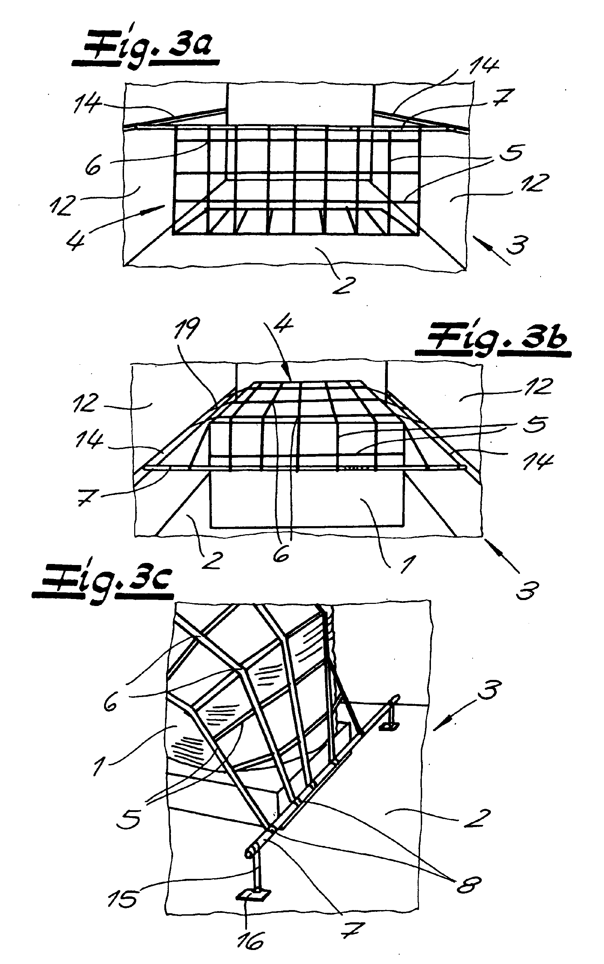

In verriegelter Stellung befindet sich der Verriegelungsschieber 9a jedoch im kurzen L-Schenkel, so dass die Feder 10 komprimiert ist. Mit Hilfe der längenvariablen Basis 7c wird die Teleskopstange 7 entsprechend den Darstellungen in den Fig. 3a und 3b zunächst auf die lichte Weite zwischen zwei Ladebordwänden 12 eingestellt. Die Verriegelungseinrichtung 9 befindet sich in verriegelter Stellung, so dass die Feder 10 vorgespannt ist. Wenn nun der Verriegelungsschieber 9a manuell den kurzen L-Schenkel verlässt und durch eine in etwa 90°-Drehung in den langen L-Schenkel der Verriegelungskulisse 9b übergeht, so kann sich die Feder 10 entspannen und wird gleichzeitig das Tauchrohr 7b aus dem Hohlrohr 7a durch die Kraft der Feder 10 herausgedrückt.

Das führt dazu, dass die Teleskopstange 7 insgesamt zwischen den beiden Ladebordwänden 12 verspannt wird. Dabei mag eine zusätzliche Einkerbung 13 frontseitig des Tauchrohres 7b (vgl. Fig. 2) ergänzend für eine formschlüssige Verbindung des Tauchrohres 7b und mithin der Teleskopstange bzw. des Sicherungsankers 7 im Ganzen an der betreffenden Ladebordwand 12 sorgen. Denn hier findet sich eine zu der Einkerbung 13 korrespondierende und nicht ausdrücklich dargestellte Erhebung in einer Befestigungsschiene 14, die sich jeweils in Längsrichtung der zugehörigen Ladebordwand 12 erstreckt.

Alternativ zu einer Festlegung des Sicherungsankers 7 bzw. der Teleskopstange 7 zwischen den Ladebordwänden 12 kann der Sicherungsanker 7 aber auch mit Hilfe von Verbindungsmitteln 15 an Zurrpunkten 16 auf der Ladefläche 2 festgelegt werden, wie die Fig. 3c deutlich macht. So oder so sorgt der Sicherungsanker bzw. die Teleskopstange 7 dafür, dass der mit ihm verbundene Gurt 5 der Sicherungsfläche 4 ebenfalls festgelegt wird und folglich auf diese Weise eine Festrandseite 17 der Sicherungsfläche 4 definiert wird. Neben dieser Festrandseite 17 verfügt die Sicherungsfläche 4 noch über drei Losrandseiten 18, die sich automatisch aufgrund des rechteckigen Charakters der Sicherungsfläche 4 einstellen.

An wenigstens einer dieser Losrandseiten 18 der Sicherungsfläche 4 findet sich ein Verbindungsgurt 19, der für die längenvariable Festlegung des Sicherungsnetzes an der der Festrandseite 17 gegenüberliegenden Losrandseite 18 sorgt. Selbstverständlich können auch alle Losrandseiten 18 mit jeweils angeschlossenen Verbindungsgurten 19 auf der Ladefläche 2 verankert werden. Im Rahmen des Ausführungsbeispiels nach der Fig. 3c liegen sich die Festrandseite 17 und die Losrandseite 18 mit dem Verbindungsgurt 19 bzw. den beiden Verbindungsgurten gegenüber, wobei sich die Sicherungsfläche 4 dazwischen befindet.

Auf diese Weise lässt sich eine Ladung 1 niederzurren, wie dies in der Fig. 3b dargestellt ist. Auch ein seitliches Verzurren entsprechend der Fig. 3c ist möglich, ebenso wie das Realisieren einer Laderaumabtrennung entsprechend der Fig. 3a. Für den einwandfreien Halt des Sicherungsmittels sorgt zudem ein nicht ausführlich dargestellter und in die Sicherungsfläche 4 integrierter Zurrgurt. Dieser umschließt wenigstens die Losrandseiten 18 außenumfangsseitig. Dadurch kann die angebrachte und mit der Ladefläche 2 verzurrte Sicherungsfläche 4 ggf. verkleinert und in Bezug auf die Ladungen 1 verspannt werden.

## Patentansprüche

1. Flächiges Sicherungsmittel, insbesondere Sicherungsnetz, zum Sichern einer Ladung (1) während ihres Transportes auf der Ladefläche (2) eines Fahrzeuges (3), mit einer Sicherungsfläche (4), welche sich wenigstens teilweise an die Kontur der zu sichernden Ladung (1) anpasst, und mit einem formstabilen Sicherungsanker (7), welcher mit der Sicherungsfläche (4) und der Ladefläche (2) zur Fixierung der Sicherungsfläche (4) verbunden ist,
wobei der Sicherungsanker (7) einen Festrandseite (17) der Sicherungsfläche (4) definiert, während an wenigstens einer Losrandseite (18) der Sicherungsfläche (4) zumindest ein Verbindungsgurt (19) zur vorzugsweise längenvariablen Festlegung der Sicherungsfläche (4) an der Ladefläche (2) vorgesehen ist
**dadurch gekennzeichnet, dass**
- der Sicherungsanker (7) als Teleskopstange ausgeführt ist, welche wenigstens ein Hohlrohr (7a) und ein demgegenüber per Federkraft vorgespanntes Tauchrohr (7b) sowie eine aus einem Verriegelungsschieber (9a) und einer L-förmig gestalteten Verriegelungskulisse (9b) zusammengesetzte Verriegelungseinrichtung (9) aufweist, wobei
- die Verriegelungseinrichtung (9) in verriegelter Stellung das Tauchrohr (7b) gegen die Federkraft vorspannt und in entriegelter Stellung das Tauchrohr (7b) freigibt.

2. Sicherungsmittel nach Anspruch 1, **dadurch gekennzeichnet, dass** der Sicherungsanker (7) in die Sicherungsfläche (4) integriert ist.

3. Sicherungsmittel nach Anspruch 1 oder 2, **dadurch gekennzeichnet, dass** der Sicherungsanker (7) randseitig der Sicherungsfläche (4) an einen Gurt (5) angeschlossen ist.

4. Sicherungsmittel nach einem der Ansprüche 1 bis 3, **dadurch gekennzeichnet, dass** die Sicherungsfläche (4) als Netzwerk aus sich kreuzenden Gurten (5) ausgebildet ist.

5. Sicherungsmittel nach Anspruch 4, **dadurch gekennzeichnet, dass** die sich kreuzenden Gurte (5) in ihren Kreuzungspunkten (6) miteinander verbunden sind.

6. Sicherungsmittel nach einem der Ansprüche 1 bis 5, **dadurch gekennzeichnet, dass** sich die Festrandseite (17) und die Losrandseite (18) mit dem Verbindungsgurt (19) in Bezug auf die dazwischen befindliche Sicherungsfläche (4) gegenüberliegen.

## Claims

1. A flat securing device, in particular a securing net, for securing a load (1) during its transport on the loading surface (2) of a vehicle (3), with a securing surface (4) that adjusts itself at least partly to the contour of the load (1) to be secured, and with a form-stable securing anchor (7), which is connected with the securing surface (4) and the loading surface (2) for fixing the securing surface (4), whereby the securing anchor (7) defines a solid edge side (17) of the securing surface (4), whilst on at least one loose-edge side (18) of the securing surface (4) at least one connection strap (19) is provided for fixing the securing surface (4), preferably variably in length, on the loading surface (2),
**characterised in that**
the securing anchor (7) is executed as a telescopic rod that at least features a hollow tube (7a) and a retractable tube (7b) that is springloaded relative to the hollow tube (7a) as well as a locking device (9) comprising a locking slide (9a) and an L-shaped locking slot (9b), whereby the locking device (9) in locked position pre-loads the retractable tube (7b) against the spring force and in unlocked position releases the retractable tube (7b).

2. The securing device according to Claim 1 **characterised in that** the securing anchor (7) is integrated in the securing surface (4).

3. The securing device according to Claim 1 or 2 **characterised in that** the securing anchor (7) is connected to a strap (5) on the side edge of the securing surface (4).

4. The securing device according to one of claims 1 to 3 **characterised in that** the securing surface (4) is formed as a network of crossing straps (5).

5. The securing device according to Claim 4 **characterised in that** the crossing straps (5) are connected with one another at their crossing points (6).

6. The securing device according to one of Claims 1 to 5 **characterised in that** the solid edge side (17) and the loose edge side (18) with the connecting strap (19) lie opposite one another in relation to the securing surface (4) positioned in-between.

## Revendications

1. Moyen de sécurité surfacique, en particulier filet de sécurité, pour assurer une charge (1) pendant son transport sur la surface de chargement (2) d'un véhicule (3), comprenant une surface de sécurité (4) qui s'adapte au moins partiellement au contour de la charge à assurer (1), et comprenant un ancrage de sécurité (7) de forme stable qui est relié à la surface de sécurité (4) et à la surface de chargement (2) pour fixer la surface de sécurité (4),
dans lequel l'ancrage de sécurité (7) définit un côté à bord fixe (17) de la surface de sécurité (4), tandis qu'au moins une courroie de liaison (19) est prévue sur au moins un côté à bord amovible (18) de la surface de sécurité (4) pour la consolidation, de préférence variable en longueur, de la surface de sécurité (4) au niveau de la surface de chargement (2),
**caractérisé en ce que** :
- l'ancrage de sécurité (7) est réalisé comme tige télescopique présentant au moins un tube creux (7a) et un tube plongeur (7b) précontraint à l'opposé de celui-ci par une force de ressort ainsi qu'un dispositif de verrouillage (9) composé d'un poussoir de verrouillage (9a) et d'une coulisse de verrouillage (9b) réalisée en forme de L, sachant que
- le dispositif de verrouillage (9) précontraint le tube plongeur (7b) à l'encontre de la force de ressort dans la position verrouillée et libère le tube plongeur (7b) dans la position déverrouillée.

2. Moyen de sécurité selon la revendication 1, **caractérisé en ce que** l'ancrage de sécurité (7) est intégré dans la surface de sécurité (4).

3. Moyen de sécurité selon l'une ou l'autre des revendications 1 et 2, **caractérisé en ce que** l'ancrage de sécurité (7) est raccordé à une courroie (5) sur le côté de bordure de la surface de sécurité (4).

4. Moyen de sécurité selon l'une des revendications 1 à 3, **caractérisé en ce que** la surface de sécurité (4) est réalisée comme réseau de courroies qui se croisent (5).

5. Moyen de sécurité selon la revendication 4, **caractérisé en ce que** les courroies qui se croisent (5) sont reliées entre elles dans leurs points de croisement (6).

6. Moyen de sécurité selon l'une des revendications 1 à 5, **caractérisé en ce que** le côté de bord fixe (17) et le côté de bord amovible (18) avec la courroie de liaison (19) sont opposés l'un à l'autre en référence à la surface de sécurité (4) se trouvant entre les deux.
